# EUROPEAN PATENT APPLICATION

(11) **EP 2 919 117 A2**
(43) Date of publication of application: **16.09.2015**
(21) Application number: 15159089.0
(22) Date of filing: 13.03.2015
(51) Int. Cl.: G06F 9/54

(54) **Flow control between processing devices**

(30) Priority: 13.03.2014 US 201414207695
(71) Applicant: Lantiq Beteiligungs-GmbH & Co.KG, 85579 Neubiberg (DE)
(72) Inventor: Babbellapati, Syam Krishna, 560016 Bangalore (IN)
(74) Representative: Sticht, Andreas

(57) **Abstract**

Various apparatuses and methods are described relating to forwarding data from an auxiliary processing device to a main processing device. Depending on a load of the main processing device and on priority of the data, data may be selectively discarded or forwarded to the main processing device.

## Description

### TECHNICAL FIELD

The present application relates to processing devices having a flow control established between them and to corresponding methods.

### BACKGROUND

For processing data, in many cases more than one processing device is used. For example, in many applications besides a main processing device, for example a general purpose processor, an auxiliary processing device is used. The auxiliary processing device may be designed for specific tasks in the processing of data, for example to perform specific calculations or any other specific task. For these specific tasks, the auxiliary processing device may for example be hardwired and therefore be very fast. On the other hand, in many cases the auxiliary processing device may not be as versatile as the main processing device.

In some scenarios, when data is to be processed, the data is first processed by the auxiliary processing device and, if needed, then forwarded to the main processing device for further processing. However, as the auxiliary processing device works fast and moreover the main processing device in some applications may also be used for other tasks, this may lead to an overloading of the main processing device, overflow of data queues and/or high delays in the processing of data. Depending on the application, for example high delay may be undesirable, in particular in case of data to be processed in real time.

### SUMMARY

An apparatus as defined in claim 1 is provided. Furthermore, a method as defined in claim 11 is provided. The dependent claims define further embodiments.

### BRIEF DESCRIPTION OF THE DRAWINGS

Fig. 1 is a block diagram of an apparatus according to an embodiment.
Fig. 2 is a block diagram of an apparatus according to a further embodiment.
Fig. 3 is a flowchart illustrating a method according to an embodiment.
Fig. 4 is a flowchart illustrating a method according to a further embodiment.

### DETAILED DESCRIPTION

In the following, various embodiments will be described in detail referring to the attached drawings. It is to be noted that these embodiments serve as illustrative examples only and are not to be construed as limiting the scope of the present application.

For example, while embodiments may be described as comprising a plurality of features or elements, in other embodiments, some of these features or elements may be omitted, or may be replaced by alternative features or elements. In other words, features or elements described with respect to embodiments are not to be construed as being essential or indispensable for implementation. In other embodiments, additional features or elements may be present.

Features from different embodiments may be combined with each other unless specifically noted otherwise. Embodiments may be implemented in hardware, firmware, software or any combination thereof. Any couplings or connections between various elements may be implemented as direct connections or couplings, i.e. connections or couplings without intervening elements, or indirect connections or couplings, i.e. connections or couplings with one or more intervening element, as long as the general function of a connection or coupling, for example to forward a specific kind of data or a specific information, is not significantly altered.

Connections or couplings may be implemented as wire-based couplings or wireless couplings.

In some embodiments, an apparatus comprising a main processing device and an auxiliary processing device may be provided. The auxiliary processing device may receive data, perform some processing on the data and may forward at least part of the thus processed data (in the following also referred to as pre-processed data) to the main processing device. The main processing device may inform the auxiliary processing device about its load, for example about its capability of handling data received from the auxiliary processing device. In case of a high load, some data may be discarded instead of being forwarded to the main processing device. In some embodiments, this discarding may be performed directly by the auxiliary processing device, for example based on a priority of the data.

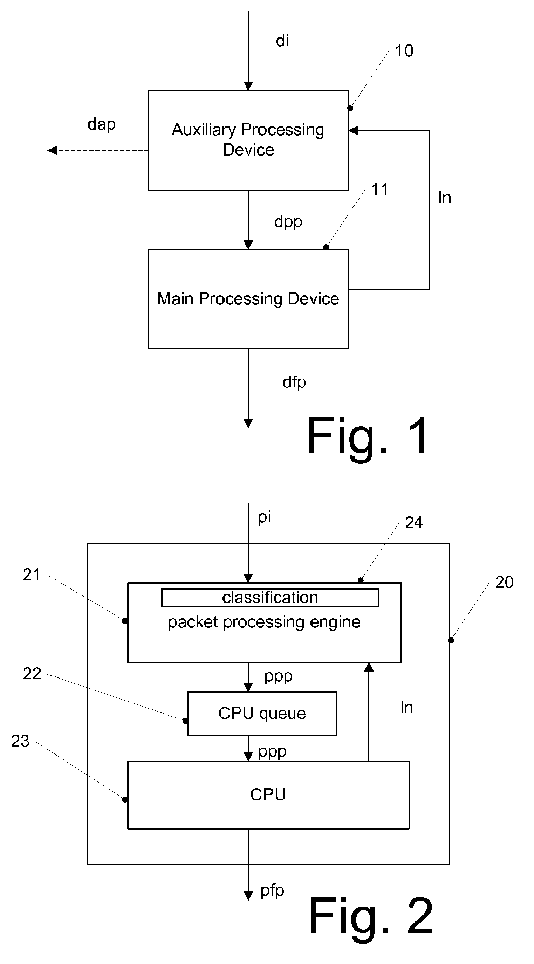

Turning now to the figures, in Fig. 1 a block diagram illustrating an apparatus according to an embodiment is shown. The apparatus of the embodiment of Fig. 1 comprises an auxiliary processing device and a main processing device. A processing device, in the context of the present application, relates to any kind of device which is able to process data and output processed data. Processing devices may be programmable devices like microprocessors or microcontrollers which are programmed accordingly, may comprise field programmably gate arrays (FPGAs) or may be hardwired device, for example application specific integrated circuits (ASICs) or arithmetic logical units (ALUs), just to give some examples.

Auxiliary processing device 10 receives input data di and processes input data di to partially processed data dpp. Auxiliary processing device 10 may be configured to perform specific tasks necessary for processing of input data di fast, i.e. may comprise a limited set of functions for processing data. For example, auxiliary processing device 10 may be hardwired to perform a certain processing. However, in some embodiments auxiliary processing device 10 may be limited to such specific tasks, whereas main processing device may for example be programmable to perform different kinds of desired processing. Main processing device 11 may process partially processed data dpp to fully processed data dfp in some embodiments. For example, tasks performed by auxiliary processing device 10 may comprise specific calculations which may be performed fast when hardwired. For some data, further processing by main processing device 11 may not be necessary after processing by auxiliary processing device 10, and such data may be output by auxiliary processing device 10 as processed data dap.

It should be noted that besides processing data received from auxiliary processing device 10, main processing device 11 may also serve other tasks in the apparatus, for example may process data other than the pre-processed data dpp received from auxiliary processing device 10, control further components and the like.

In embodiments, auxiliary processing device 10 as mentioned may be configured to perform its assigned tasks very fast. On the other hand, main processing device 11 as mentioned may be more versatile, but may be slower to process data and/or may be occupied by other tasks than the processing of pre-processed data dpp. Therefore, when a rate of input data di is high and processed fast by auxiliary processing device 10, the amount of pre-processed data dpp may overload main processing device 11, which for example may lead to high delays.

In the embodiment of Fig. 1, main processing device 11 notifies auxiliary processing device 10 of its load via a feedback path with a load notification In. For example, load notification In may notify auxiliary processing device 10 if there is a low load, medium load or high load in main processing device 11, or may for example express the load of main processing device 11 in some percentage. Any other measure of the load may also be used to build load notification In.

In embodiments, depending on the load notification In, auxiliary processing device 10 may decide to discard some of the data di and forward only some of the data as pre-processed data dpp to main processing device 11. For example, in case load notification In indicates a low load of main processing device 11, all pre-processed data dpp based on all incoming data di may be forwarded to main processing device 11 in some embodiments. In case load notification In indicates a high load, only data having a high priority, for example real time data, may be processed by auxiliary processing device 10 and forwarded as partially processed data dpp to main processing device 11. In case of a medium load, data with a high priority and with a medium priority may be forwarded, and data with a low priority may be discarded. Other schemes may be used as well.

Assigning a priority to the data may be performed in auxiliary processing device 10 in some embodiments. In other embodiments, input data di itself may contain indications regarding its priority.

Therefore, with the scheme of Fig. 1 it may be ensured that high priority data is processed even when the load of the main processing device 11 is high in some embodiments, whereas other data may be discarded so as not to further contribute to the load of main processing device 11.

While the apparatus of Fig. 1 is not limited to any specific kind of data, in some embodiments, data di may be data received via a communication connection, for example a wireless communication connection or a wire-based communication connection. In some embodiments, input data di may comprise frames, packets, cells or any other kinds of data units used in various communication standards.

For example, in Fig. 2, an embodiment of an apparatus is shown which is configured to process packets. The apparatus of Fig. 2 is implemented as a system-on-chip (SoC) 20, i.e. components 21-23 described in the following are integrated on a single chip. In other embodiments, components 21-23 may be provided on separate chips. In some embodiments, additional components (not shown in Fig. 2) may also be provided on SoC 20. SoC 20 comprises a packet processing engine 21 which receives incoming packets pi. Packet processing engine 21 is an example for an auxiliary processing device and may be configured to, for example hardwired to, perform a limited processing with the incoming packets pi. Such limiting processing may for example comprise header extraction, cyclic redundancy checks and/or other processing to be performed with packets. Incoming packets pi may be packets according to a wireless communication standard like a WLAN standard or a cellular network standard (GPRS, UMTS, LTE, ...) or according to a wire-based communication standard (powerline standards, xDSL standards (ADSL, ADSL2, VDSL, VDSL2, SHDSL, ...), home network standards or similar). In other embodiments, the packets may be non-standard packets. Packet processing engine may for example be implemented as hardware, firmware or a combination of hardware and firmware, but also may be at least partially implemented using software.

After processing by packet processing engine 21, packet processing engine 21 forwards at least some of the packets as partially processed packets ppp to a CPU queue 22, where they await processing by a central processing unit (CPU) 23.

CPU queue 22 may for example comprise a memory with the capacity to store a certain number of packets.

CPU 23 is an example for a programmable main processing device and may be programmed to perform a desired processing of the pre-processed packets ppp. It should be noted while not explicitly shown in Fig. 2, similar to what was explained for Fig. 1 some packets may not need processing by CPU 23 and may be output by packet processing engine 21 directly. Other packets may be directly forwarded to CPU queue 22 without processing by packet processing engine 21. Besides processing of pre-processed packets ppp, CPU 23 may also serve other tasks, for example control functions, user interfacing functions or the like.

Packet processing engine 21 may be designed to perform limited tasks which it may perform in a very fast manner. This may lead to an overload of CPU queue 22 and/or CPU 23 in case CPU 23 has a high load, for example caused by a high rate of incoming packets and/or by a high amount of other tasks CPU 23 has to perform.

CPU 23 may notify packet processing engine 21 about its load with a load notification In. For example, the CPU load may classified in three zones, a first zone with low load or minimal load (may be visualized as "green" for explanation purposes), which indicates that the CPU is only slightly loaded. A second zone may indicate a moderate CPU load (which for illustration purposes may be referred to as "yellow" load). A third zone indicates a high load of the CPU (for example more than 80 % load or more than 90 % load) and for illustration purposes may be referred to as "red" load. CPU 23 may inform packet processing engine 21 about its load in regular intervals, in irregular intervals, after a certain number of packets, after each packet or according to any other notification scheme.

It should be noted that the classification into three different load zones serves only as an example, and any number of load zones, for example only two load zones or more than three load zones, may be used. In some embodiments, the load may for example also be notified using a percentage of CPU load.

Depending on the load notification, packet processing engine 21 may drop some received packets based on their priority. For example, packets may be classified into three different priorities (low, medium and high), although in other embodiments any other number of different priorities may also be used. Using the example given above, for example in an embodiment where the CPU load is "green", packets of all priorities may be processed by packet processing engine 21 and forwarded as pre-processed packets to CPU queue 22. In case the CPU load is "yellow", packet processing engine 21 may for example discard packets with a low priority and only process packets with medium and high priority and forward these to CPU queue 22 as pre-processed packets ppp. In case the CPU load is "red", packet processing engine 21 may discard packets with low and medium priority and only process and forward packets with high priority as pre-processed packets to CPU queue 22.

In some embodiments, packet processing engine 21 may comprise a classification engine 24 to assign priorities to the incoming packets di. In other embodiments, the priority may be marked in the incoming packets pi themselves, for example in headers thereof. Priority may for example be assigned based on a type of packets.

For example, real time packets like voice over IP (VoIP) packets which enable telephony may be assigned a high priority. Other real time packets like packets of a video stream may be assigned a high priority or medium priority. Packets which are not real time packets, for example packets related just to downloading files, may be assigned a low priority. Such packets may be discarded and resent later, which may prolong the duration of the download, but which does not disturb for example a telephone conversation using voice over IP. Additionally or alternatively, the priorities may also be assigned for example based on a quality of service (QoS) class assigned to a sender or receiver of the packets. For example, some users of a communication service may have a more expensive service contract, and packets sent by or to such users may be assigned a higher priority than packets send by or to users with a cheaper service contract. Other criteria for classification may be used as well.

In some embodiments, packet processing engine 21 may notify senders of packets when packets are discarded. In other embodiments, additionally or alternatively packet processing engine or any other component of SoC 20 may acknowledge processing of packets to a sender.

While packets are used as an example in Fig. 2, in other embodiments other types of data units like cells, symbols or frames may be used as well.

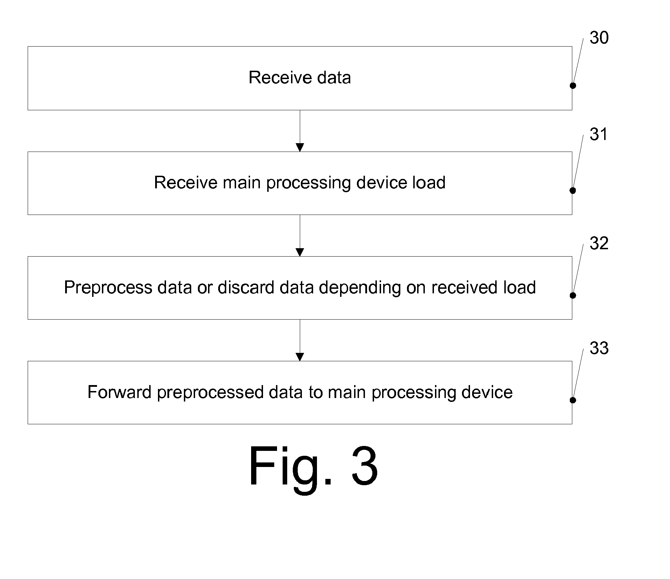

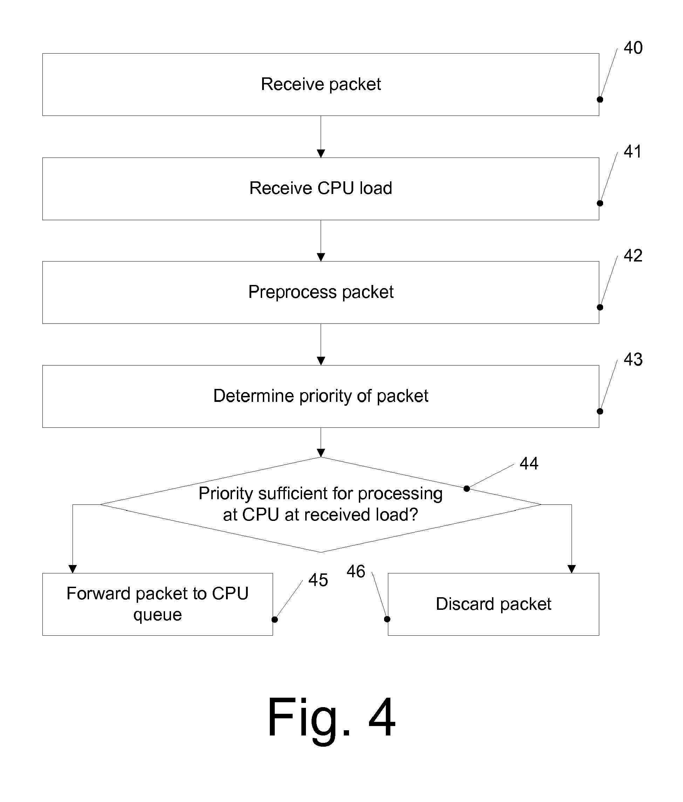

Next, with reference to Figs. 3 and 4 illustrative methods according to some embodiments will be described. While the methods will be described as a series of acts or events, the order in which such acts or events are described is not to be construed as limiting. Instead, in other embodiments the order may differ from the order shown and/or described, various acts or events may be performed repeatedly, e.g. periodically or non-periodically, some acts or events may be performed parallel with other acts or events (including acts or events not explicitly described), some acts or events may be omitted, and/or additional acts or events may be provided.

The methods described may be implemented using the apparatuses of Fig. 1 or 2, but may also be implemented using other apparatuses or devices.

Turning now to Fig. 3, in the embodiment illustrated in Fig. 3 at 30 the method comprises receiving data at an auxiliary processing device. The data may be any kind of data to be processed, for example packetized data used in a communication system.

Furthermore, at 31 the method comprises receiving information regarding a load of a main processing device at the auxiliary processing device. In some embodiments, the auxiliary processing device and the main processing device may be implemented as described with reference to Fig. 1.

At 32, depending on the information regarding the load, the auxiliary processing device either discards received data or pre-processes received data. For example, when the information indicates a low load of the main processing device, all data may be pre-processed by the auxiliary processing device. In case the information indicates a high load of the main processing device, only data having a high priority may be pre-processed, and other data may be discarded. In other embodiments, other criteria may be used.

At 33, data pre-processed at 32 is forwarded to the main processing device for further processing. Other data may not need further processing and be output directly. It is to be noted that in other embodiments, all data may be at least partially pre-processed at the auxiliary processing device, for example to determine a priority of the data. The decision if data is to be discarded may then be taken prior to the forwarding at 33. For example, when the information indicates a low load of the main processing device, all data may be forwarded to the main processing device. In case the information indicates a high load of the main processing device, only data having a high priority may be forwarded, and other data may be discarded. In other embodiments, other criteria may be used.

With reference to Fig. 4, a method according to a further embodiment will now be described. For the method of Fig. 4, for illustration purposes it will be assumed that packets are to be processed as an example for data. In other embodiments, other kinds of data, e.g. cells or frames, may be processed.

In the embodiment of Fig. 4, at 40 a packet processing engine, for example packet processing engine 21 of Fig. 2 or any other packet processing engine, receives a packet. At 41, furthermore the packet processing engine receives information regarding a load of a central processing unit (CPU). In some embodiments, the receiving of the CPU load at 41 may be performed for each received packet at 40. In other embodiments, receiving the CPU load may be performed in regular or irregular intervals. For example, in some embodiments the CPU may send information about its load only when the load changes.

At 42, the packet may be pre-processed by the packet processing engine. The pre-processing of the packet may comprise any task the packet pre-processing engine is designed for, for example cyclic redundancy checks, header extraction, or any other actions associated with handling, for example routing or otherwise forwarding, of packets. Optionally, furthermore at 43 the priority of the packet is determined. For example, packet processing engine may determine the priority of the packet based on the type of the data in the packet (real time data, non-real time data, voice data, video data, etc.) or a quality of service (QoS) required for a sender and/or receiver of the packet. In other embodiments, the packet itself may comprise an indicator of its priority, which may for example be added at a sender of the packet. In this case, no additional determination of priority at the packet processing engine may be needed.

At 44, the packet processing engine checks if the priority of the packet is sufficient for it to be processed by the CPU given the CPU load received at 41. For example, when the CPU load is low, all packets irrespective of their priority may be processed and forwarded to a CPU queue at 45. When for example the CPU load is high, the packet processing engine may only forward packets with a high priority to the CPU at 45, and may discard packets with lower priority at 46. In case of a medium CPU load, for example packets with low priority may be discarded at 46, and packet process engine may forward packets with high or medium priority to the CPU queue at 45.

While in the embodiment of Fig. 4 each packet may be pre-processed at 42, in other embodiments the pre-processing may fully or partially occur between 44 and 45, i.e. packet processing engine in some embodiments may only be pre-process packets if, based on their priority and the CPU load, they will then be forwarded to the CPU queue. Otherwise, such packets may be discarded without pre-processing.

Other approaches, for example approaches using only two priority levels may be used. In other embodiments, more than three load levels, for example the load given as a percentage, and/or more than two priority levels for the packets may be used. In other embodiments, other data units than packets may be used, for example cells.

According to an embodiment, an apparatus is provided, comprising:
an auxiliary processing device configured to receive data to be processed,
a main processing device, and
a feedback path from the main processing device to the auxiliary processing device, the main processing device being configured to inform the auxiliary processing device about a load of the main processing device via the feedback path,
wherein the auxiliary processing device is configured to selectively discard received data based on the load of the main processing device and a priority of the data.

The auxiliary processing device may further be configured to forward pre-processed data to the main processing device based on the priority and the load.

The auxiliary processing device may comprise a limited set of functions to process data.

The auxiliary processing device may comprise hardware, firmware or a combination of hardware and firmware to perform processing of the limited set of functions.

The auxiliary processing device may comprise a classification engine to assign a priority to received data.

The main processing device may be configured to send information about its load by indicating one of at least two different load zones.

The auxiliary processing device may be configured to discard data of a low priority when a load of the main processing device is high.

According to another embodiment, a system-on-chip is provided, comprising:
a data unit processing engine to receive incoming data units,
a central processing unit (CPU), and
a CPU queue operably coupled between the data unit processing engine and the CPU, and
a feedback path from the CPU to the data unit processing engine, the CPU being configured to notify the data processing engine about a load of the CPU via the feedback path,
wherein the data unit processing engine is configured to selectively forward received data units to the CPU queue based on a priority of the data units and the load information received from the CPU.

The data unit processing engine may be configured to pre-process the data units prior to forwarding the data units to the CPU queue.

The data unit processing engine may be configured to discard at least some of the data units not forwarded to the CPU queue based on the load information and the priority of the data unit.

The data units may be packets.

The data unit processing engine may further comprise a classification engine to assign a priority to the data units.

The load information may be selected from a first information indicating a low load, a second information indicating a medium load and a third information indicating a high load.

The priority may be selected from a high priority, a medium priority or a low priority, wherein at a low load, all data units are forwarded to the CPU queue irrespective of the priority of the data units,
wherein at a medium load, only data units with high or medium priority are forwarded to the CPU queue, and data units with low priority are discarded, and
wherein at a high load, only data units with a high priority are forwarded to the CPU queue, and data units with a medium or low priority are discarded.

Features of the system-on-chip mentioned above may also be implemented in the apparatus mentioned above and vice versa.

According to a further embodiment, a method is provided, comprising:
receiving data at an auxiliary processing device,
receiving a load of a main processing device at the auxiliary processing device, and
selectively discard data depending on the received load and a priority of the data.

The method may further comprise selectively forwarding pre-processed data to the main processing device based on the load and the priority of the data.

Receiving data may comprise receiving data packets.

The method may further comprise assigning a priority to received data.

Assigning the priority may comprise at least one of assigning priority based on a type of data or assigning the priority based on a service class of a sender or receiver of the data. Forwarding the data to the main processing device may comprise forwarding the data to a queue assigned to the main processing device.

The above-described embodiments serve only as illustrative examples and are not to be construed as limiting.

## Claims

1. An apparatus, comprising:
an auxiliary processing device configured to receive data to be processed,
a main processing device, and
a feedback path from the main processing device to the auxiliary processing device, the main processing device being configured to inform the auxiliary processing device about a load of the main processing device via the feedback path,
wherein the auxiliary processing device is configured to selectively discard received data based on the load of the main processing device and a priority of the data.

2. The apparatus of claim 1, wherein the auxiliary processing device is further configured to forward pre-processed data to the main processing device based on the priority and the load.

3. The apparatus of claim 1 or 2, wherein the auxiliary processing device comprises a limited set of functions to process data.

4. The apparatus of claim 3, wherein the auxiliary processing device comprises hardware, firmware or a combination of hardware and firmware to perform processing of the limited set of processing.

5. The apparatus of any one of claims 1-4, wherein the auxiliary processing device comprises a classification engine to assign a priority to received data.

6. The apparatus of claim 5, wherein the load information is selected from a first information indicating a low load, a second information indicating a medium load and a third information indicating a high load.

7. The apparatus of claim 6, wherein the priority is selected from a high priority, a medium priority or a low priority,
wherein at a low load, all data units are forwarded to the main processing device irrespective of the priority of the data units,
wherein at a medium load, only data units with high or medium priority are forwarded to the main processing device, and data units with low priority are discarded, and
wherein at a high load, only data units with a high priority are forwarded to the main processing device, and data units with a medium or low priority are discarded.

8. The apparatus of any one of claims 1-7, wherein the main processing device is configured to send information about its load by indicating one of at least two different load zones.

9. The apparatus of any one of claims 1-8,
wherein the main processing device comprises a central processing unit (CPU), and
wherein the apparatus comprises a CPU queue operably coupled between the auxiliary processing unit and the CPU.

10. The apparatus of any one of claims 1-9, wherein the apparatus is implemented as a system-on-chip.

11. A method, comprising:
receiving data at an auxiliary processing device,
receiving a load of a main processing device at the auxiliary processing device, and
selectively discard data depending on the received load and a priority of the data.

12. The method of claim 11, further comprising selectively forwarding pre-processed data to the main processing device based on the load and the priority of the data.

13. The method of claim 11 or 12, further comprising assigning a priority to received data.

14. The method of claim 13, wherein assigning the priority comprises at least one of assigning priority based on a type of data or assigning the priority based on a service class of a sender or receiver of the data.

15. The method of any one of claims 11-14, wherein forwarding the data to the main processing device comprises forwarding the data to a queue assigned to the main processing de-vice.
